# EUROPEAN PATENT SPECIFICATION

(11) **EP 0 417 667 B1**
(45) Date of publication and mention of the grant of the patent: **25.05.1994**
(21) Application number: 90117305.4
(22) Date of filing: 07.09.1990
(51) Int. Cl.: B01D 53/36

(54) **Denitration device for exhaust gas with varying temperature**
Vorrichtung zur Entstickung von Abgasen bei verschiedenen Temperaturen
Dispositif pour la dénitration des gaz d'échappement à des températures variées

(30) Priority: 14.09.1989 JP 236987/89; 24.08.1990 JP 221044/90
(43) Date of publication of application: 20.03.1991
(73) Proprietor: MITSUBISHI JUKOGYO KABUSHIKI KAISHA, Tokyo (JP)
(72) Inventor: Kaneko, Shozo, Nagasaki Shipyard & Engine Works, Nagasaki-shi, Nagasaki-ken (JP); Imamoto, Toshihiko, Nagasaki Shipyard & Engine, Nagasaki-shi, Nagasaki-ken (JP); Serizawa, Satoru Nagasaki Shipyard & Engine Works, Nagasaki-shi, Nagasaki-ken (JP); Yamamura, Misao, Nagasaki Shipyard & Engine Works, Nagasaki-shi, Nagasaki-ken (JP); Morii, Atsushi, Nagasaki Shipyard & Engine Works, Nagasaki-shi, Nagasaki-ken (JP)
(74) Representative: Henkel, Feiler, Hänzel & Partner

(56) References cited:
- EP-A- 0 268 265
- GB-A- 2 082 085
- US-A- 4 160 805
- JAPANESE PATENT ABSTRACTS UNEXAMINED, section Ch, week 8933, 27th September 1989, class J, page 5, accession no. 89-237422/33, Derwent Publications Ltd, London, GB; & JP-A-1 171 625 (TOYOTA) 06-07-1989
- JAPANESE PATENTS ABSTRACTS UNEXAMINED, section Ch, week 8836, 19th October1988, class H, page 1, accession no. 88-252650/36, Derwent Publications Ltd,London, GB; & JP-A-63 182 035 (BABCOCK-HITACHI) 27-07-1988

## Description

### BACKGROUND OF THE INVENTION

### Field of the Invention

The present invention relates to a denitration device for exhaust gases with varying temperature discharged from a combined plant or a cogeneration plant in which a gas turbine is combined with a steam turbine, etc.

### Description of the Prior Art

Heretofore, as shown in Fig. 5, exhaust gases from a gas turbine 01 are introduced into an exhaust gas boiler 02 having an ammonia injection nozzle 04 and a denitration device 03 using a catalyst, in which denitration and heat recovery are conducted for the exhaust gases, and then they are discharged from a stack 05. Exhaust gases at a temperature of 200 to 400°C after the recovery of waste heat in the exhaust gas boiler 02 are supplied to a denitration device and a catalyst working effectively in the temperature region is used.

In the denitration device for the conventional gas turbine described above, since the temperature of the exhaust gases is lowered to 200 - 400°C by the exhaust gas boiler and denitration is conducted by the denitration device in the exhaust gas boiler, the gas turbine can not be operated solely, for example, in a combined plant or a cogeneration plant having a gas turbine and a steam turbine using steams resulting from the exhaust gas boiler as a driving source.

In the combined or cogeneration plant having the gas turbine and the steam turbine in combination, it has, accordingly, been demanded for enabling the independent operation of the gas turbine and disposing a dry process denitration device at the exit of the gas turbine for simplifying the structure of a waste heat recovery boiler.

However, there are the following problems in this case:
(1) Catalysts practically used at present suffer from degradation under continuous operation at a temperature higher than 400 to 450°C and, accordingly, they can not be applied at the exit of the gas turbine in which the highest temperature may reach about 600°C.
(2) Although a catalyst capable of working at a temperature upto about 550°C has been developed at present, such a catalyst has a poor performance in a low temperature region (200 - 450°C) and can not cope with the change of load on the side of the gas turbine.

Accordingly, a denitration device capable of reducing NOₓ over a wide range at the exit of the gas turbine has not yet been attained.

### OBJECT OF THE PRESENT INVENTION

It is, accordingly, an object of the present invention to overcome the foregoing problems and provide a denitration device for exhaust gases at varying temperature from a gas turbine.

### SUMMARY OF THE INVENTION

The foregoing object of the present invention can be attained by a denitration device for exhaust gases with varying temperature in accordance with the present invention comprising:
a high/low temperature denitration device having a denitrating catalyst layer for high temperature region comprising a zeolite catalyst containing CuSO₄ and a denitrating catalyst layer for low temperature region comprising a TiO₂-catalyst containing vanadium and tungsten disposed in parallel with each other along the direction of a gas flow, and
a damper and an ammonia injection nozzle disposed to the upstream of the denitrating catalyst layers for high temperature and low temperature regions.

In the exhaust gas denitration device according to the present invention, when the temperature of exhaust gases varies, for example, the temperature goes higher, the damper is actuated to introduce the exhaust gases to the catalyst layer for high temperature region of the high/ low temperature denitration device to conduct denitration. On the other hand, if the exhaust gas temperature is lower, the damper is actuated to introduce the exhaust gases to the catalyst layer for low temperature region of the denitration device to conduct denitration. In this way, effective denitration can be conducted irrespective of the change of the exhaust gas temperature.

In a preferred embodiment of the present invention, a denitration device for exhaust gases as defined above is used, wherein the high/low temperature denitration device is disposed just after an exhaust gas generation source.

In this preferred embodiment according to the present invention, effective denitration can be conducted irrespective of the change of the exhaust gas temperature by the high/low temperature denitration device as described above. In addition, since the high/low temperature denitration devices is disposed just after the exhaust gas generation source, structures of subsequent equipments such as an exhaust gas boiler can be simplified.

In a further embodiment of the present invention, a denitration device for exhaust gases as defined above is used, wherein the high/low temperature denitration device is disposed between an exhaust gas generation source and an exhaust gas boiler having a bypass channel for selectively bypassing the exhaust gases.

In this further embodiment of the present invention, effective denitration can also be conducted irrespective of the temperature change of the exhaust gases. In addition, exhaust gases can be introduced at an appropriate ratio to the exhaust gas boiler to ensure a required amount of steams generated by the exhaust gas boiler, as well as independent operation of the gas turbine is enabled in a plant in which a gas turbine is used as an exhaust gas generation source, and combined with a steam turbine using steams generated by the exhaust gas boiler. Furthermore, since there is no more required to provide the exhaust gas boiler with the denitration device, the structure can be simplified.

In this still further embodiment of the present invention, high denitration performance can be maintained irrespective of the change of the temperature of the exhaust gases by the use of the catalysts of the specific ingredients for high and low temperature regions.

### BRIEF DESCRIPTIONS OF THE ACCOMPAYING DRAWINGS

These and other objects, as well as advantageous features of the present invention will become apparent by reading descriptions for the preferred embodiment of the present invention with reference to the accompanying drawings appended therein, wherein
Fig. 1 is a system chart of a preferred embodiment according to the present invention;
Fig. 2 is a perspective view of a catalyst used in this embodiment.
Fig. 3 is a graph showing the result of a test that demonstrates the performance of the catalyst used in the embodiment of the present invention and the catalyst as a reference example;
Fig. 4 is a graph illustrating the denitrating performance as a result of experiment in the pilot plant according to the above preferred embodiment and
Fig. 5 is a system chart illustrating the conventional denitration device.

### DESCRIPTION OF THE PREFERRED EMBODIMENT

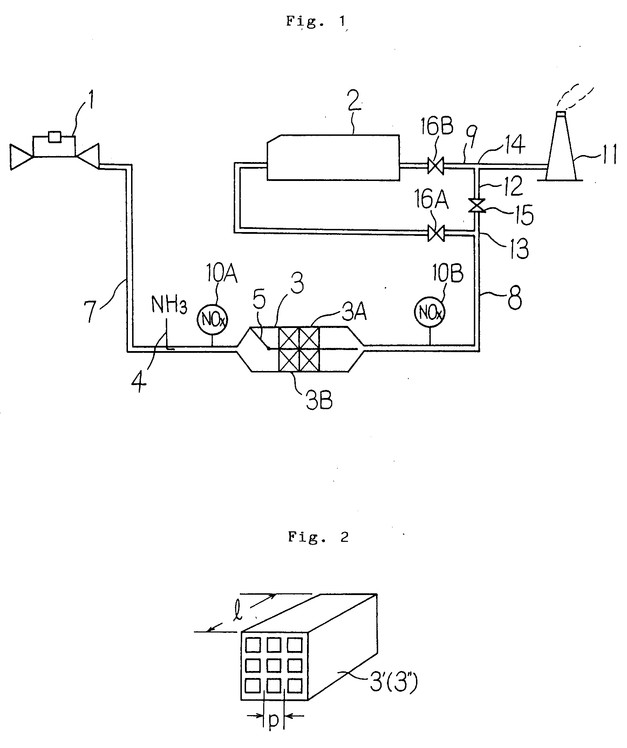

The present invention will be explained by way of its embodiment with reference to Figs. 1 and 2. A gas turbine 1 has an exhaust gas pipeway 7, in which are successively disposed, from the upstream, an ammonia injection nozzle 4, a high/low temperature denitration device 3 and an exhaust gas boiler 2 for generating steams to be used in a steam turbine not illustrated. Exhaust gases are discharged through a stack 11 disposed to the downstream.

The high/low temperature denitration device 3 is connected at the exit thereof with a pipeline 8, which is connected with the exhaust gas boiler 2 and the exit of the gas boiler 2 is connected by way of a pipeline 9 to the stack 11.

The high/low temperature denitration device 3 is bisected along the flowing direction of the exhaust gases, in which a low temperature region catalyst layer 3A and a high temperature region catalyst layer 3B are disposed in the bisected portions respectively in parallel with each other in the flowing direction of the exhaust gases.

Further, an exhaust gas switching damper 5 is disposed to the upstream of both of the catalyst layers 3A and 3B in the high/low temperature denitration device 3. Control valves 16A and 16B are disposed to the pipeways 8 and 9 respectively, and a branching portion 13 is disposed to the upstream of the control valve 16A in the pipeline 8, while a branching portion 14 is disposed between the control valve 16B and the stack 11 in the pipeline 9. The branching portions 13 and 14 are connected through a bypass pipeline 12 by way of a control valve 15. NOₓ gages 10A and 10B are disposed in the pipelines 7 and 8 near the inlet and the exit of the high/low temperature denitration device 3 respectively. In both of the high/low temperature region catalyst layers, catalysts prepared by extrusion molding into a honeycomb shape as shown in Fig. 2, followed by drying and burning are used. A catalyst 3′ prepared by extrusion molding a catalyst ingredient comprising 75% TiO₂, 5% V₂O₅, 10% WO₃ and 10% molding aid into a honeycomb shape with an opening pitch p of 4 mm and a length l of 50 mm and then drying and baking (refer to Fig. 2) (hereinafter referred to as the catalyst A) is packed into the low temperature region catalyst layer 3A, while a catalyst 3˝ prepared by extrusion molding a catalyst ingredient comprising 80% zeolite, 10% CuSO₄ (copper sulfate) and 10% molding aid into a honeycomb shape with an opening pitch p of 4 mm and a length l of 20 mm and then drying and baking (refer to Fig. 2) (hereinafter referred to as the catalyst B) is packed into the high temperature region catalyst layer 3B respectively.

In this embodiment, ammonia as a reducing agent is injected from the ammonia injection nozzle 4 into the exhaust gases in the exhaust gas pipeline 7 and then the exhaust gases are denitrated in the high/low temperature denitration device 3 and then discharged by way of the pipeline 8, the exhaust gas boiler 2 and the pipeline 9 from the stack 11.

When the temperature of the exhaust gases is lower, the damper 5 is so actuated to pass the exhaust gases through the low temperature region catalyst layer 3A. When the temperature of the exhaust gases is higher, the damper 5 is so actuated to pass the exhaust gases through the high temperature region catalyst layer 3B. This enables efficient denitration irrespective of the temperature of the exhaust gases.

As has been described above in this embodiment, denitration can be conducted at a high efficiency irrespective of the temperature of the exhaust gases. Further, by controlling the amount of the exhaust gases passing through the exhaust gas boiler 2 by adjusting the control valves 16A, 16B and 15, steams can be obtained by a required amount from the exhaust gas boiler 2 while keeping the discharged amount of NOₓ less than a predetermined level. In addition, since the denitration can be conducted in the high/low temperature denitration device for the entire temperature region of the exhaust gases, if the operation of the exhaust gas boiler 2 is not required or should be interrupted, it is possible to operate only the gas turbine 1 independently by fully closing the control valves 16A and 16B while opening the control valve 15, thereby allowing the entire amount of the exhaust gases to pass through the bypass pipeline 12.

Further, since it is not necessary to provide the exhaust gas boiler 2 with the denitration device, the ammonia injection nozzle, etc. The structure can be simplified.

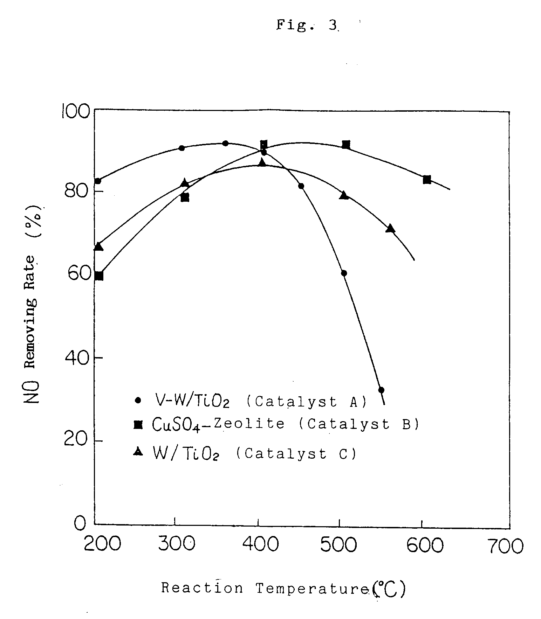

Fig. 3 shows the results of a test conducted under the below-mentioned conditions for the temperature characteristics of the catalysts A and B described above and a catalyst prepared by extrusion molding a catalyst ingredient comprising 75% TiO₂, 15% WO₃ and 10% molding aid into a honeycomb shape with an opening pitch of 7 mm and then drying and baking (hereinafter referred to as the catalyst C).

It can be seen from the figure that the catalyst A having an activity at low temperature reduces its activity at high temperature, the catalyst C has a function intermediate between the catalyst A and B, and the catalyst B shows high activity at a temperature higher than about 450°C.

| Test Condition | |
|---|---|
| SV (space velocity) value: | about 5000 H⁻¹ |
| NH₃/NOₓ: | 1.0 |
| Gas temperature: | 200 - 600°C |

| Gas property | |
|---|---|
| NOₓ: | 300ppm |
| O₂: | 4% |
| CO₂: | 10% |
| N₂: | balance |

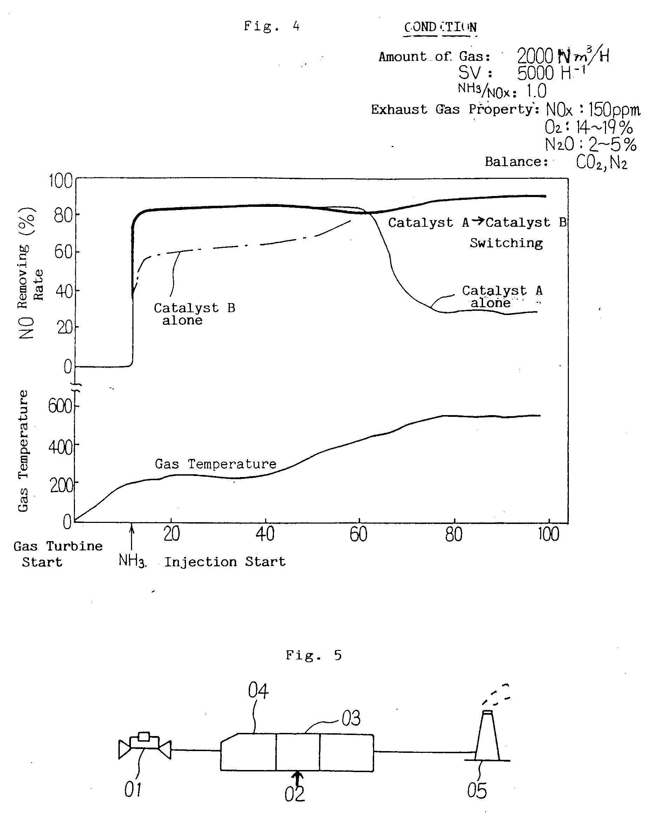

Description will now be made to an experimental example using a pilot plant according to this embodiment. Exhaust gases at a flow rate of 2000 Nm³/H at the exit of the gas turbine 1 was branched into the pipeline 7, and the denitrating function was compared for the case of using the catalyst layer 3A (catalyst A) and the catalyst layer 3B (catalyst B) each alone and in such a composite operation as using the catalyst layer 3A till the temperature reaches 400°C and, thereafter, switching the operation to the catalyst layer 3B, respectively, in accordance with the start of the gas turbine. As a result, required performance (NOₓ removal rate of 80%) could not be attained in the high temperature region by the catalyst A alone and in the low temperature region by the catalyst B alone. However it was confirmed that the predetermined performance could be attained stably for a wide range by using the catalyst A in the low temperature region and then switching the operation to the catalyst B after reaching 400°C as shown in Fig. 4. The SV value, the NH₃/NOₓ ratio and the property of the exhaust gases in the high/low temperature denitration device in this experimental example are as shown in Fig. 4.

As has been described above, in this embodiment, it has been confirmed that a required denitrating rate can be ensured even if the temperature of exhaust gases from the gas turbine varies.

As has been described above according to the present invention, stable and efficient denitrating effect can be obtained even if the temperature of the exhaust gases varies in the high/low temperature denitration device, as well as the structure of the equipment can be simplified.

In addition, since a bypassing circuit for the exhaust gas boiler is disposed for sending exhaust gases while bypassing the exhaust gas boiler and directly to the stack selectively in the present invention, required steams can be generated after conducting required denitration and, in addition, it is possible to operate the gas turbine solely in a plant comprising the gas turbine and the steam turbine in combination.

## Claims

1. A denitration device for exhaust gases with varying temperature comprising:
a high/low temperature denitration device (3) having a denitration catalyst layer for high temperature region (3B) comprising a zeolite catalyst containing CuSO₄ and a denitration catalyst layer for low temperature region (3A) comprising a TiO₂-catalyst containing vanadium and tungsten disposed in parallel with each other along the direction of a gas flow and
a damper (5) and an ammonia injection nozzle (4) disposed to the upstream of said denitrating catalyst layers for high/low temperature regions."

2. Use of a denitration device for exhaust gases as defined in claim 1, wherein the high/low temperature denitration device (3) is disposed just after an exhaust gas generation source (1).

3. Use of a denitrating device for exhaust gases as defined in claim 1, wherein the high/low temperature denitration device (3) is disposed between an exhaust gas generation source (1) and an exhaust gas boiler (2) having a bypassing channel (12) for bypassing exhaust gases selectively.

## Patentansprüche

1. Entstickungsvorrichtung für Abgase wechselnder Temperatur, umfassend eine Hoch/Niedrigtemperatur-Entstickungseinrichtung (3) mit einer Entstickungskatalysatorschicht für einen Hochtemperaturbereich (3B), umfassend einen Zeolithkatalysator mit CuSO₄, und eine Entstickungskatalysatorschicht für einen Niedrigtemperaturbereich (3A), umfassend einen TiO₂-Katalysator mit Vanadium und Wolfram, die in Richtung des Gasstroms parallel zueinander angeordnet sind, und
einen Schieber bzw. eine Klappe (5) sowie eine Ammoniakeinspritzdüse (4), die stromaufwärts von den Entstickungskatalysatorschichten für die Hoch/Niedrig-Temperaturbereiche angeordnet sind.

2. Verwendung einer Entstickungsvorrichtung für Abgase gemäß Anspruch 1, wobei die Hoch/Niedrigtemperatur-Entstickungsvorrichtung (3) unmittelbar nach einer Abgaserzeugungsquelle (1) angeordnet ist.

3. Verwendung einer Entstickungsvorrichtung für Abgase nach Anspruch 1, wobei die Hoch/Niedrigtemperatur-Entstickungsvorrichtung (3) zwischen einer Abgaserzeugungsquelle (1) und einem Abgaskessel (2) mit einem Umgehungskanal (12) zum selektiven Umleiten von Abgasen angeordnet ist.

## Revendications

1. Un dispositif de dénitration pour gaz d'échappement à des températures variées comportant :
un dispositif (3) de dénitration à température élevée/basse, comportant une couche de catalyseur de dénitration pour une région (3B) à température élevée comprenant un catalyseur zéolite contenant CuSO₄, et une couche de catalyseur de dénitration pour une région (3A) à température basse comprenant un catalyseur TiO₂ contenant du vanadium et du tungstène, disposées en parallèle l'une par rapport à l'autre dans la direction d'écoulement d'un gaz, et
un amortisseur (5) et une buse (4) d'injection d'ammoniac disposés en amont des couches de catalyseurs de dénitration pour les régions à température élevée/basse.

2. Utilisation d'un dispositif de dénitration pour gaz d'échappement tel que défini dans la revendication 1, dans laquelle le dispositif (3) de dénitration à température élevée/basse est disposé juste après une source (1) de création des gaz d'échappement.

3. Utilisation d'un dispositif de dénitration pour gaz d'échappement tel que défini dans la revendication 1, dans laquelle le dispositif (3) de dénitration à température élevée/basse est disposé entre une source (1) de création des gaz d'échappement et une chaudière (2) de gaz d'échappement comportant un canal (12) de dérivation pour by-passer sélectivement les gaz d'échappement.
